# FASCICULE DE BREVET EUROPEEN

(11) **EP 1 998 538 B1**
(45) Date de publication et mention de la délivrance du brevet: **27.03.2013**
(21) Numéro de dépôt: 08290086.1
(22) Date de dépôt: 31.01.2008
(51) Int. Cl.: H04M 3/42, H04W 88/06, H04Q 3/00

(54) **Système et procédé d'identification de l'opérateur du numéro d'appel d'un correspondant en mémoire au niveau du terminal d'un utilisateur**
System und Verfahren zur Identifizierung des Teilnehmers der Rufnummer, die einem Eintrag im Endgerätspeicher eines Benutzers entspricht
System and method of identifying the operator of the call number of a correspondent in the memory of a user's terminal

(30) Priorité: 01.06.2007 FR 0703916
(43) Date de publication de la demande: 03.12.2008
(73) Titulaire: Société Française du Radiotéléphone-SFR, 75008 Paris (FR)
(72) Inventeur: Faisy, Christian, 97417 La Montagne (FR)
(74) Mandataire: Debay, Yves

(56) Documents cités:
- US-A- 6 091 809
- US-A1- 2007 121 806

## Description

La présente invention se rapporte au domaine des systèmes d'identification des opérateurs ou des fournisseurs d'accès téléphoniques et plus particulièrement au domaine des systèmes d'identification de l'opérateur ou du fournisseur d'accès Internet qui gère les communications téléphoniques d'un correspondant et d'association d'un élément d'identification de l'opérateur ou du fournisseur d'accès au numéro d'un correspondant.

Un exemple se trouve dans US 2007/121806.

Il est courant que les opérateurs téléphoniques proposent des offres promotionnelles qui incitent à multiplier les appels vers des correspondants utilisant le même opérateur. La réalisation d'appels internes au réseau de l'opérateur se trouve alors facturée de façon nettement avantageuse par rapport à des appels effectués vers l'extérieur du réseau, c'est-à-dire vers des correspondants qui utilisent un opérateur téléphonique différent de celui de l'utilisateur. Pour l'utilisateur qui souhaite profiter pleinement de ce type d'offre dite « *on net »,* il est impératif qu'il soit en mesure de connaître les opérateurs de ses différents correspondants.

Actuellement, la seule solution connue pour un utilisateur de téléphonie mobile qui souhaite remédier à ce problème consiste à se renseigner auprès de chacun de ses correspondants pour connaître l'opérateur qu'ils utilisent respectivement puis de faire en sorte de les apprendre par coeur pour pouvoir s'en souvenir.

La présente invention a pour objectif de proposer un système qui permette de faciliter d'une part le renseignement sur l'opérateur ou le fournisseur d'accès Internet proposant au moins un service de téléphonie utilisé par le terminal d'un correspondant et d'autre part la mémorisation de ce renseignement.

Cet objectif est atteint grâce à un système d'identification de l'opérateur ou du fournisseur d'accès Internet proposant au moins un service de téléphonie d'au moins un numéro d'appel d'un correspondant en mémoire au niveau du terminal d'un utilisateur caractérisé en ce que le système comprend :
- au moins un terminal d'un utilisateur comprenant au moins une mémoire intégrée ou associée au terminal comprenant un répertoire de numéros d'appels des correspondants de l'utilisateur,
- une application SIM Tool Kit ou un logiciel intégré au terminal de l'utilisateur et gérant au moins un dispositif d'envoi d'une demande d'identification de l'opérateur ou du fournisseur d'accès Internet du numéro d'appel d'au moins un correspondant et au moins un dispositif de réception d'une réponse à la demande d'identification,
- une plateforme de gestion d'identifications de l'opérateur ou du fournisseur d'accès Internet du numéro d'appel d'au moins un correspondant, cette plateforme comprenant au moins une interface de réception de demandes et une interface d'émission de réponses, ainsi qu'un serveur d'identification relié à au moins un équipement formant une base de données qui intègre une correspondance entre des numéros d'appel et un opérateur téléphonique ou un fournisseur d'accès Internet,
- un réseau de communication entre les différents composants du système et comprenant un ou plusieurs éléments caractéristiques d'un réseau.

Selon une variante de l'invention, le système d'identification d'un opérateur ou d'un fournisseur d'accès Internet est caractérisé en ce que le terminal comprend un moyen de mémorisation qui intègre une table de correspondance entre un élément de réponse à la demande formant un code représentatif d'au moins un opérateur ou fournisseur d'accès Internet et/ou d'une erreur et un pictogramme.

Selon une autre variante de l'invention, le système d'identification d'un opérateur ou d'un fournisseur d'accès Internet est caractérisé en ce que la plateforme de gestion d'identifications est muni d'un moyen de mise en attente des demandes intégrant un moyen de mémorisation temporaire de type F.I.F.O. (*First In First Out*)*.*

Selon une autre variante de l'invention, le système d'identification d'un opérateur ou d'un fournisseur d'accès Internet est caractérisé en ce que le serveur d'identifications comprend un dispositif de création de comptes et/ou de sous-comptes provisoires dans un moyen de mémorisation, ces comptes et/ou sous-comptes, respectivement associés à une requête, sont définis d'une part par le numéro d'appel du correspondant dont l'utilisateur souhaite connaître l'opérateur ou le fournisseur d'accès Internet et d'autre part par le numéro d'appel de l'utilisateur vers lequel retourner une réponse à la requête.

Selon une autre variante de l'invention, le système d'identification d'un opérateur ou d'un fournisseur d'accès Internet est caractérisé en ce que, le réseau de communication comprenant un SMS-C (*Short Message Service Center*) qui assure la communication entre le terminal de l'utilisateur et la plateforme de gestion d'identifications, l'application SIM Tool Kit ou le logiciel du terminal de l'utilisateur est associée à un moyen de rédaction d'un SMS contenant le numéro d'un correspondant de l'utilisateur dont l'opérateur ou le fournisseur d'accès Internet est à identifier.

Selon une autre variante de l'invention, le système d'identification d'un opérateur ou d'un fournisseur d'accès Internet est caractérisé en ce que, le réseau comprenant un dispositif passerelle de gestion de communication WAP (*Wireless Application Protocol*) ou 3G qui permette d'assurer la communication entre le terminal de l'utilisateur et la plateforme de gestion d'identifications, l'application SIM Tool Kit ou le logiciel du terminal de l'utilisateur est associé à un moyen de transfert d'un fichier intégrant au moins un numéro d'un correspondant de l'utilisateur dont l'opérateur ou le fournisseur d'accès Internet est à identifier.

Selon une autre variante de l'invention, le système d'identification d'un opérateur ou d'un fournisseur d'accès Internet est caractérisé en ce que, la base de données constituée de l'ensemble des correspondances, pour au moins un pays, entre des numéros d'appels et leur opérateur ou fournisseur d'accès Internet respectif en charge du contrat intégrant ce numéro d'appel forme un A.E.M.C. (Annuaire Externe Mobilité Commun), l'A.E.M.C. est associé à un dispositif comprenant :
- une interface de réception d'une requête associée à un compte provisoire transmise par le.serveur d'identifications,
- un moyen d'investigation dans au moins une base de données de l'A.E.M.C.,
- un moyen de rédaction d'une réponse à la requête reçue, et
- une interface de transmission d'une réponse rédigée au compte provisoire du serveur d'identifications qui correspond à la requête.

Selon une autre variante de l'invention, le système d'identification d'un opérateur ou d'un fournisseur d'accès Internet est caractérisé en ce que le serveur d'identifications comprend un moyen de contrôle du traitement de l'ensemble des requêtes correspondant à un même compte provisoire, ce moyen de contrôle comprenant au moins un compteur du nombre d'entrées/sorties des requêtes de l'A.E.M.C.

Selon une autre variante de l'invention, le système d'identification d'un opérateur ou d'un fournisseur d'accès Internet est caractérisé en ce que la réponse à la demande d'identification, qui est transmise au terminal depuis la plateforme de gestion d'identifications, comprend au moins un code d'identification de l'opérateur ou du fournisseur d'accès Internet et/ou un pictogramme d'identification du même opérateur/fournisseur d'accès Internet.

Un autre objectif de la présente invention est de proposer un procédé qui permette le bon fonctionnement d'un tel système.

Cet objectif est atteint grâce à un procédé d'identification de l'opérateur ou d'un fournisseur d'accès Internet d'au moins un numéro d'appel d'un correspondant en mémoire au niveau du terminal d'un utilisateur mettant en jeu un système d'identification selon l'invention, caractérisé en ce que le procédé comprend au moins :
- une étape de sélection d'au moins un numéro d'appel d'un correspondant dont l'opérateur ou le fournisseur d'accès Internet doit être déterminé,
- une étape, gérée par l'application SIM Tool Kit ou le logiciel, d'envoi d'une demande d'identification de l'opérateur ou du fournisseur d'accès Internet d'au moins un numéro d'appel d'un correspondant de l'utilisateur depuis le terminal de l'utilisateur,
- une étape de réception de la demande au niveau de la plateforme de gestion d'identifications de l'opérateur ou du fournisseur d'accès Internet,
- une étape d'analyse de la demande au niveau de la plateforme de gestion d'identifications.
- une étape d'envoi d'une réponse à la demande d'identification de l'opérateur ou du fournisseur d'accès Internet depuis la plateforme de gestion d'identifications vers le terminal de l'utilisateur,
- une étape de réaction de l'application SIM Tool Kit ou du logiciel du terminal de l'utilisateur.

Selon une variante de l'invention, le procédé d'identification d'un opérateur ou d'un fournisseur d'accès Internet est caractérisé en ce qu'il comprend :
- une étape, gérée par l'application SIM Tool Kit ou par le logiciel, de rédaction d'une demande d'identification de l'opérateur ou du fournisseur d'accès Internet d'au moins un numéro d'appel d'un correspondant sélectionné par l'utilisateur, cette demande, formée par un message ou fichier, comprenant au moins le numéro du terminal de l'utilisateur,
- une étape de rédaction d'une réponse à la demande d'identification au niveau de la plateforme de gestion d'identifications.

Selon une autre variante de l'invention, le procédé d'identification d'un opérateur ou d'un fournisseur d'accès Internet est caractérisé en ce que, l'étape d'analyse de la demande au niveau de la plateforme de gestion comprend :
- une étape de gestion de la demande au niveau de la plateforme de gestion définissant une requête pour chaque numéro d'appel dont l'opérateur ou le fournisseur d'accès Internet est à identifier,
- une étape de traitement d'au moins une requête au niveau d'au moins une base de données constituée de l'ensemble des correspondances, pour un pays donné, entre des numéros d'appels et leur opérateur ou fournisseur d'accès Internet respectif,

Selon une autre variante de l'invention, le procédé d'identification d'un opérateur ou d'un fournisseur d'accès Internet est caractérisé en ce que, la demande envoyée depuis le terminal portant pour plusieurs numéros d'appel, l'étape de gestion de la demande comprend :
- une étape de création d'un compte provisoire au niveau d'un moyen de mémorisation associé au serveur d'identifications pour chaque numéro d'utilisateur effectuant une demande,
- une étape de création d'au moins un sous-compte provisoire pour chaque numéro d'appel d'un correspondant pour lequel l'opérateur ou le fournisseur d'accès Internet est à identifier,
- une étape de définition d'une requête d'investigation pour chaque numéro d'appel associé à un sous-compte,
- une étape de transmission de la requête à l'A.E.M.C. qui gère le traitement de la requête au niveau d'au moins une base de données constituée de l'ensemble des correspondances, pour un pays donné, entre des numéros d'appel et leur opérateur ou fournisseur d'accès Internet respectif.

Selon une autre variante de l'invention, le procédé d'identification d'un opérateur ou d'un fournisseur d'accès Internet est caractérisé en ce que, la demande envoyée depuis le terminal portant pour un seul numéro d'appel, l'étape de gestion du procédé comprend :
- une étape de mise en attente de la demande au niveau d'un moyen de mémorisation tampon de type F.I.F.O.,
- une étape de définition d'une requête d'investigation pour le numéro d'appel en attente de traitement,
- une étape de transmission de la requête à l'A.E.M.C. qui gère le traitement de la requête.

Selon une autre variante de l'invention, le procédé d'identification d'un opérateur ou d'un fournisseur d'accès Internet est caractérisé en ce que l'étape de traitement de la requête au niveau de l'A.E.M.C. comprend :
- une étape d'investigation dans la base de données constituée de l'ensemble des correspondances entre les numéros d'appels et leur opérateur ou fournisseur d'accès Internet respectif pour retrouver l'opérateur ou le fournisseur d'accès Internet du numéro d'appel qui correspond à la requête,
- une étape de rédaction d'une réponse à la requête comprenant élément d'identification ou d'erreur associé au numéro d'appel traité,
- une étape de transmission de la réponse au compte provisoire du serveur d'identifications.

Selon une autre variante de l'invention, le procédé d'identification d'un opérateur ou d'un fournisseur d'accès Internet est caractérisé en ce que les étapes de gestion de la demande et de traitement de la requête sont réalisées concomitamment à une étape de contrôle du traitement de l'ensemble des requêtes correspondant à un même compte provisoire, cette étape de contrôle comprenant au moins une étape de comptage des requêtes transmises à l'A.E.M.C. et des réponses reçues de l'A.E.M.C.

Selon une autre variante de l'invention, le procédé d'identification d'un opérateur ou d'un fournisseur d'accès Internet est caractérisé en ce que l'étape d'envoi d'une réponse depuis la plateforme de gestion d'identifications vers le terminal de l'utilisateur consiste en l'envoi d'un élément de type S.M.S. à l'application SIM Tool Kit ou au logiciel.

Selon une autre variante de l'invention, le procédé d'identification d'un opérateur ou d'un fournisseur d'accès Internet est caractérisé en ce que l'étape d'envoi d'une réponse depuis la plateforme de gestion d'identifications vers le terminal de l'utilisateur concerne l'envoi d'un lien accessible depuis le terminal muni d'une connexion W.A.P. ou 3G, cette étape est alors suivie par :
- une étape de téléchargement par le terminal de l'utilisateur d'un fichier comprenant au moins un élément de réponse correspondant à un numéro d'appel de correspondant pour lequel une recherche d'opérateur ou d'un fournisseur d'accès Internet a été effectuée,
- une étape d'effacement du compte provisoire du moyen mémoire de la plateforme de gestion.

Selon une autre variante de l'invention, le procédé d'identification d'un opérateur ou d'un fournisseur d'accès Internet est caractérisé en ce que, l'élément de réponse pour chaque numéro d'appel pour lequel une recherche a été effectuée forme un code accompagné ou non d'un pictogramme représentatif d'un opérateur ou d'un fournisseur d'accès Internet et/ou d'une erreur, l'étape de réaction de l'application SIM Tool Kit ou du logiciel comprend :
- une étape d'enregistrement du code et du pictogramme correspondant reçus comme réponse pour chaque numéro d'appel dont l'opérateur ou le fournisseur d'accès internet a été recherché, le pictogramme n'étant pas encore enregistré dans un moyen de mémorisation de la carte SIM, du logiciel ou du terminal, ou
- une étape de décryptage du code reçu comme réponse pour chaque numéro d'appel dont l'opérateur ou le fournisseur d'accès internet a été recherché, le code correspondant à un pictogramme enregistré dans un moyen de mémorisation de la carte SIM, du logiciel ou du terminal, et
- une étape d'activation d'un pictogramme correspondant à un code-réponse lié à un numéro d'appel,
- une étape d'affichage au niveau du terminal d'au moins un pictogramme correspondant à l'opérateur ou au fournisseur d'accès Internet du numéro d'appel pour lequel une réponse a été reçue.

Selon une autre variante de l'invention, le procédé d'identification d'un opérateur ou d'un fournisseur d'accès Internet est caractérisé en ce que, l'élément de réponse pour chaque numéro d'appel pour lequel une recherche a été effectuée forme un pictogramme représentatif d'un opérateur/fournisseur d'accès Internet ou représentatif d'une erreur, l'étape de réaction de l'application SIM Tool Kit ou du logiciel comprend :
- une étape d'affichage au niveau du terminal d'au moins un pictogramme correspondant à l'opérateur ou au fournisseur d'accès internet du numéro d'appel pour lequel une réponse a été reçue ou affichage d'un message, d'un code et/ou d'un pictogramme d'erreur.

Selon une autre variante de l'invention, le procédé d'identification d'un opérateur ou d'un fournisseur d'accès Internet est caractérisé en ce que, lorsque le numéro pour lequel une demande d'investigation a été demandée est un numéro étranger qui est absent des bases de l'A.E.M.C. national, le code d'erreur est remplacé par une adresse de connexion à un A.E.M.C. qui correspond au pays étranger du numéro.

Selon une autre variante de l'invention, le procédé d'identification d'un opérateur ou d'un fournisseur d'accès internet est caractérisé en ce que, le numéro pour lequel une demande d'investigation a été demandée étant un numéro étranger absent des bases de l'A.E.M.C. national, le procédé comprend :
- une étape de discrimination du code pays du numéro recherché,
- une étape de transmission du code pays du numéro recherché à un équipement supranational A.E.M.I. (Annuaire Externe Mobilité International) intégrant une table qui comprend les correspondance entre les codes pays et les adresses des A.E.M.C. nationaux, l'A.E.M.I. étant interconnecté avec l'ensemble des A.E.M.C. nationaux,
- une étape de rédaction et d'envoi par l'A.E.M.I. d'une requête à l'A.E.M.C. qui correspond au code pays du numéro recherché,
- une étape de rédaction et d'envoi d'une réponse par l'A.E.M.C. à la requête de l'A.E.M.I., la réponse contenant au moins un numéro recherché et l'indication par code associé ou non au pictogramme de l'opérateur étranger qui correspond au numéro recherché,
- une étape de mise à jour du sous-compte correspondant au numéro étranger recherché.

Selon une autre variante de l'invention, le procédé d'identification d'un opérateur ou d'un fournisseur d'accès Internet est caractérisé en ce que, le compte provisoire étant conservé dans le moyen mémoire de la plateforme de gestion, le procédé comprend au moins :
- une étape de mise à jour de la correspondance entre un numéro et son opérateur/fournisseur d'accès internet au niveau d'au moins une des bases de données de l'A.E.M.C.,
- une étape de recherche des différents formats pour le numéro dont l'opérateur à été mis à jour, faisant intervenir une table de traduction d'un numéro en plusieurs possibilités de formats de saisi reconnus,
- une étape de recherche d'au moins un sous-compte correspondant à un numéro dont l'opérateur à été mis à jour dans un format de saisi reconnu,
- une étape de modification de l'élément d'identification de l'opérateur du sous-compte associé à un numéro d'appel dont la correspondance a été mise à jour,
- une étape de transmission du nouvel élément d'identification de l'opérateur au terminal dont le numéro est associé au compte provisoire.

L'invention, avec ses caractéristiques et avantages, ressortira plus clairement à la lecture de la description faite en référence aux dessins annexés dans lesquels :

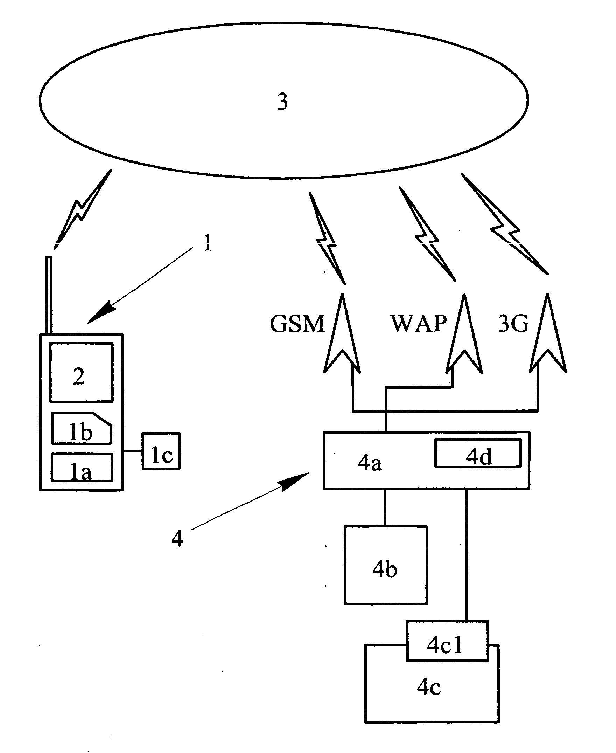

- la figure 1 représente le schéma d'une variante de mise en place du système d'association de l'invention,

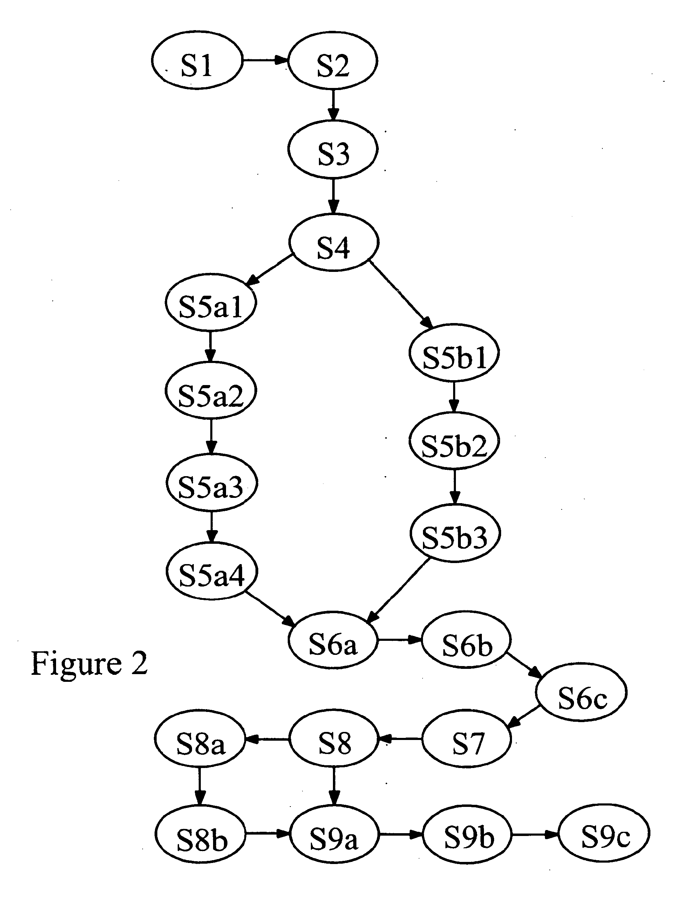

- la figure 2 représente le schéma de différentes étapes d'une variante du procédé de fonctionnement de l'invention.

Dans l'ensemble du document, le terme « opérateur » doit être compris dans un sens large. C'est ainsi qu'il est relatif aussi bien à des opérateurs de téléphonie, fixe ou mobile, qu'à des fournisseurs d'accès Internet qui proposent un ou plusieurs services de téléphonie ou bien encore à des opérateurs de radiomessagerie.

De même, le terme « A.E.M.C. » (Annuaire Externe Mobilité Commun) ne définit pas de façon restrictive un dispositif comprenant une table de correspondance entre des numéros de terminaux mobiles et leur opérateur respectif, mais vient s'appliquer à un dispositif comprenant une ou plusieurs tables de correspondance entre un numéro de terminal, fixe ou mobile, et son opérateur ou fournisseur d'accès internet.

Le système d'association de l'invention permet à un utilisateur d'effectuer depuis son terminal (1) une demande d'identification de l'opérateur gérant au moins un des numéros d'appel d'un correspondant enregistré dans la mémoire (1b) de la carte SIM du terminal (1) ou dans la mémoire propre (1a) à ce terminal (1), voire même dans une mémoire externe (1 c) associée au terminal (1). Le terminal (1) de l'utilisateur comprend des moyens de saisie et d'affichage qui permettent à l'utilisateur d'effectuer une demande d'identification.

Le système de l'invention comprend une application SIM Tool Kit ou un logiciel (2) installé au niveau du terminal (1) de l'utilisateur. Cette application SIM Tool Kit ou ce logiciel (2) est défini dans la norme GSM comme un moyen qui permet notamment à l'utilisateur d'interagir avec son terminal (1). Cette application (2) vient gérer les communications entre le terminal (1) sur lequel elle se trouve installée et une plateforme (4) de gestion d'identifications des opérateurs de numéros d'appel d'abonné. La communication entre l'application (2) du terminal (1) et la plateforme (4) de gestion s'effectue via un réseau (3) qui met en jeu des installations caractéristiques d'un réseau de communication de téléphonie mobile.

Selon des modes de réalisation particuliers du système de l'invention, le réseau intègre au moins un SMS-C. (*Short Message System Center*) adapté au transfert de demandes portant sur des numéros d'appel uniques, et/ou une passerelle de connexion WAP (*Wireless Application Protocol*) et/ou une passerelle de connexion 3G adaptés au transfert de demandes portant sur des groupes de numéros d'appel. Ces éléments sont alors spécifiques d'une interface de communication de la plateforme de gestion (4).

L'application « SIM Tool Kit » ou le logiciel (2) au niveau du terminal (1) gère d'une part les envois de demandes d'identification de numéro d'appel et d'autre part les réponses à ces demandes. Pour ce faire, l'application se trouve associé à des moyens de rédaction et d'envoi de demandes. La rédaction de chacune de ces demandes se trouve ainsi contrôlée grâce à l'application SIM Tool Kit ou au logiciel (2) sous la forme d'un message ou d'un fichier transmis depuis le terminal (1) vers la plateforme de gestion d'identifications (4). L'application (2) contrôle également les réponses reçues de la plateforme (4) en association avec un dispositif de réception. Ce contrôle peut faire intervenir, si nécessaire, un dispositif de décryptage associé à l'application SIM Tool ou au logiciel (2) lorsque la réponse comprend au moins un élément d'identification ou d'erreur codé.

Selon une variante de réalisation, les informations transmises dans le réseau peuvent connaître un cryptage de type clé publique/clé privée, la clé publique pouvant par exemple être stockée dans l'applet Sim ou logiciel.

Par ailleurs, lorsque l'identification correspond à l'affichage d'un pictogramme de l'opérateur à coté du numéro d'appel du correspondant de l'utilisateur, l'application SIM Tool Kit ou le logiciel (2) se trouve associé à un moyen d'inscription des pictogrammes des opérateurs respectifs des numéros d'appels dans la mémoire (1a) du terminal (1) ou de la carte SIM (1 b) ou associée (1 c) au terminal (1).

La plateforme (4) de gestion d'identifications de l'opérateur d'un numéro d'appel comprend plusieurs éléments. Un premier élément forme le serveur d'identification (4a). Ce serveur (4a), qui présente notamment une interface de communication avec au moins un terminal (1) du système au travers d'un réseau (3) de communication, fonctionne à la fois pour recevoir des demandes d'identification et pour envoyer les réponses à ces demandes vers les différents terminaux (1). Le serveur (4a) tient le rôle d'interface entre le réseau (3) et l'ensemble des éléments de la plateforme de gestion d'association (4). Le serveur d'identification (4a) se trouve ainsi relié à au moins une base de données (4c) comprenant l'ensemble des correspondances entre des numéros d'appels et leur opérateur respectif, pour un pays donné. Dans le cadre des numéros de terminaux mobiles, cette base de correspondances opérateur/numéro est appelée un Annuaire Externe Mobilité Commun (A.E.M.C.). Ces bases de données (4c), et plus particulièrement les A.E.M.C., sont actuellement connus au niveau national, mais peuvent tout à fait être développés à un niveau supranational (Europe, zone ALENA, etc.).

Cet A.E.M.C. (4c) est associé à un dispositif (4c1) qui intègre au moins un moyen d'investigation et comprend également des moyens de rédaction d'une réponse et des moyens de communication avec le serveur d'identification (4a), à l'intérieur de la plateforme de gestion d'identifications (4).

Par ailleurs, selon un mode de réalisation préféré de l'invention, la plateforme de gestion (4) comprend un moyen de mémorisation (4b) relié au serveur d'identification (4a). Cette mémoire (4b) intervient dans le procédé de gestion des différentes demandes au niveau de la plateforme, notamment par la création/suppression de comptes, voire sous-comptes, provisoires. Une telle mémoire est adaptée à la gestion des demandes d'investigation qui portent sur des groupes de numéros d'appel.

Selon un autre mode de réalisation de l'invention, la plateforme de gestion (4) intègre un dispositif de contrôle comprenant un moyen de comptage qui vérifie notamment que le nombre de réponses reçues par le serveur d'identification (4a) est égal au nombre de requêtes d'investigation transmises à l'A.E.M.C. (4c). Ce dispositif permet de vérifier que les demandes reçues qui présentent des requêtes d'identification pour plusieurs numéros d'appel ont toute eu une investigation (S6a) avant qu'une réponse ne soit transmise au terminal (1) de l'utilisateur.

Selon une variante du mode de réalisation de l'invention, la plateforme de gestion (4) intègre un moyen de mise en attente (4d) des demandes successives, comprenant un moyen de mémorisation temporaire de type F.I.F.O. (*First In First Out*). Une telle mémoire est adaptée à la gestion des demandes d'investigation qui portent sur des groupes de numéros d'appel.

Le procédé de fonctionnement du système de l'invention implique avant tout une étape (S1) de sélection par l'utilisateur, au niveau de son terminal (1), d'au moins un numéro d'appel d'un correspondant en mémoire dont il souhaite déterminer l'opérateur. Cette étape (S1) de sélection fait intervenir l'application SIM Tool Kit ou le logiciel (2) activé par l'utilisateur via les moyens d'affichage et de saisie du terminal (1).

Une fois que l'utilisateur a déterminé pour quel(s) numéro(s) d'appel de correspondant en mémoire dans le terminal (1) une identification de l'opérateur doit être demandée, l'application « SIM Tool Kit » ou le logiciel (2) active la rédaction (S2) d'une demande d'identification. Cette demande peut, selon l'interface de communication choisie (S.M.S.-C ou passerelle W.A.P. ou 3G) avec la plateforme de gestion d'identification (4) prendre la forme d'un simple message ou d'un fichier. Dans les différents cas, cette demande est définie par au moins un numéro d'appel d'un correspondant de l'utilisateur dont l'opérateur est à identifier ainsi que par le numéro d'appel de l'utilisateur. Une fois la demande rédigée (S2), celle-ci est alors envoyée (S3) depuis le terminal (1) vers la plateforme de gestion (4) à travers le réseau (3) utilisé par le système de l'invention.

Lorsque la demande est réceptionnée (S4) au niveau de la plateforme de gestion (4), celle-ci est analysée. Elle connaît alors une étape de gestion (S5) parmi les différentes autres demandes en provenance de terminaux d'autres utilisateurs, suivie d'une étape de traitement (S6) afin de proposer une réponse à la demande.

Selon une première variante de l'étape (S5) de gestion réalisée au niveau du serveur d'identification (4a), afin de gérer correctement plusieurs demandes, une fois la demande réceptionnée, celle est mise en attente (S5b1) au niveau d'un moyen mémoire (4d) de type F.I.F.O. qui tient le rôle de mémoire tampon. Pour chaque demande, une requête d'investigation est alors définie (S5b2) pour le numéro d'appel en attente de traitement. La requête est ensuite transmise (S5b3) à l'A.E.M.C. (4c) qui traite la requête.

Selon une autre variante de l'étape de gestion (S5) adaptée aux demandes d'investigation pour des groupes de numéros d'appel de correspondants d'un même utilisateur. Une requête est définie pour chacun des numéros d'appel dont l'opérateur est à identifier pour une même demande provenant d'un même utilisateur. Cette étape de gestion (S5) s'effectue alors dans un premier temps par la création (S5a1) d'un compte provisoire dans un moyen de mémorisation (4b) de la plateforme (4) de gestion. Ce compte provisoire ainsi créé est alors référencé par le numéro d'appel du terminal de l'utilisateur qui effectue la demande. Au niveau de ce compte provisoire, un sous-compte provisoire est créé (S5a2) pour chaque numéro d'appel de correspondant pour lequel l'opérateur est à identifier, puis une requête d'investigation est définie (S5a3) pour chacun des numéros d'appel associé à un sous-compte. Lorsqu'une requête est définie, celle-ci est alors transmise (S5a4) à l'A.E.M.C. (4c) pour y être traitée.

Pour chacune des variantes de l'étape de gestion (S5) du procédé de l'invention, la définition de requêtes pour chaque numéro d'appel demandé par un utilisateur à partir des demandes d'investigation permet alors, en association avec une mémoire tampon ou la création de comptes/sous-comptes, d'éviter que des doublons d'investigation soit réalisés pour un même numéro.

Le traitement (S6) de la requête par l'A.E.M.C. (4c) a pour objectif d'apporter une réponse à la demande d'identification de l'opérateur. Cette étape de traitement (S6) s'effectue dans un premier temps par une étape d'investigation (S6a) de l'opérateur du numéro d'appel qui correspond à la requête. Cette étape d'investigation (S6a) met en jeu au moins un moyen d'investigation associé à au moins une base de données constituée de l'ensemble des correspondances entre les numéros d'appels et leur opérateur respectif pour un pays donné. Cette étape d'investigation (S6a) fait intervenir au moins un premier discriminant du numéro d'appel qui permet de déterminer dans quelle base de données doit se faire l'investigation. Ainsi, par exemple, un identifiant du numéro d'appel peut permettre de déterminer si l'investigation doit se réaliser dans une base de numéros géographiques de terminaux fixes (0Z), dans une base de numéros de terminaux mobiles (06), dans une base de numéros proposant des services, dans une base de numéros étrangers, dans une base de numéros proposés par au moins un fournisseur d'accès Internet, dans une base de numéros de radiomessagerie, etc.

Lorsque l'investigation (S6a) est effectuée, une réponse à la requête est rédigée (S6b). Cette réponse comprend alors un élément d'identification de l'opérateur ou d'erreur si l'investigation (S6a) n'a pas permis d'aboutir. Cet élément de réponse se trouve alors associé d'une part au numéro d'appel du correspondant pour lequel l'investigation a été demandée et d'autre part au numéro d'appel de l'utilisateur. Cette réponse est alors transmise (S6c) au serveur d'identification (4c) de la plateforme de gestion (4).

Selon une variante du procédé, l'élément d'identification ou d'erreur de la réponse correspond respectivement à un code d'activation d'un pictogramme propre à l'opérateur du numéro d'appel ou bien à un code d'erreur. Un moyen de mémorisation intégré au terminal (1) ou à la carte SIM (1b) du terminal ou bien encore associé à l'application SIM Tool Kit ou au logiciel (2) du terminal (1) comprend une table de correspondance entre chaque code d'opérateur ou d'erreur et un pictogramme. Toutefois, au niveau de l'A.E.M.C., un moyen de mémorisation comprend également l'ensemble des tables de correspondance entre les codes opérateur et les pictogrammes associés. En effet, lorsque l'opérateur est nouveau, par exemple dans le cas d'un M.V.N.O. (Opérateur de Réseau Mobile Virtuel), et/ou lorsqu'une correspondance entre un nouveau code d'opérateur et un nouveau pictogramme n'a pas encore été mémorisée dans la table de correspondance du moyen de mémorisation au niveau du terminal (1), l'élément d'identification de la réponse comprend cette nouvelle correspondance transmise sous la forme d'un couple nouveau code d'opérateur/nouveau pictogramme.

Selon une réalisation particulière du procédé, différents codes d'erreur peuvent être utilisés, chacun étant spécifique d'une erreur particulière, par exemple lorsque le numéro d'appel dont l'opérateur a été recherché est un numéro fixe ou bien un numéro mobile étranger, etc.

Au niveau du serveur d'identification (4c), chacune des réponses reçues se trouve stockée au niveau du compte/sous-compte correspondant afin de vérifier l'absence de doublon. Une réponse est alors rédigée (S7) par le serveur d'identification (4c) avant d'être transmise (S8) au terminal (1) de l'utilisateur via le réseau (3) du système.

Dans le cas où une même demande d'investigation comprend une recherche d'opérateur pour plusieurs numéros d'appel de correspondants, la demande se trouve enregistrée de façon provisoire sous un compte qui porte le numéro d'appel de l'utilisateur et qui comprend plusieurs sous-comptes à raison d'un sous-compte par correspondant demandé. Seuls les sous-comptes qui présentent un même numéro d'utilisateur saisi de la même manière sont considérés comme doublons. Ainsi un numéro saisi au format national (01 23 45 67 89) est reconnu comme différent du même numéro saisi au format international (33 1 23 45 67 89), l'enregistrement de ces numéros se faisant alors sous des sous-comptes différents. De même, au niveau de l'application Sim Tool Kit ou logicielle du terminal lors d'une demande d'investigation pour plusieurs numéros d'appel de correspondants, si deux utilisateurs ont une orthographe différente (Dupond et Dupont) mais présentent un même numéro, ils ne seront pas considérés comme des doublons, mais seront bien transmis pour requête à la plateforme et seront enregistrés sous des sous-comptes respectifs. Le procédé de l'invention comprend alors une étape de contrôle (S10) qui est réalisée par un dispositif de contrôle qui vérifie que l'ensemble des requêtes d'un même compte provisoire ont été traitées. Ce contrôle (S10) est effectué en continue, parallèlement aux étapes de gestion (S5) et de traitement (S6). Il fait intervenir un moyen de comptage qui vérifie notamment que le nombre de requêtes transmises à l'A.E.M.C. (4c) est égale au nombre de réponses fournies au serveur d'identification (4a) par l'A.E.M.C. et permet ainsi à la plateforme de gestion (4) de ne transmettre (S8) au terminal (1) qu'une seule réponse qui vient englober les résultats des investigations de tous les numéros d'appel de la demande, cette réponse n'étant transmise (S8) qu'une fois l'étape de contrôle (S10) terminée avec succès.

Selon le type d'interface utilisée, et généralement le nombre de requêtes d'investigation effectuée pour une même demande, la réponse envoyée (S8) par le serveur d'identification ne présente pas la même forme. Dans le cas où la demande ne porte que sur une identification de l'opérateur d'un nombre réduit de numéros d'appel, la réponse est alors généralement effectuée sous la forme d'un message de type S.M.S. En revanche, dans le cas d'une demande portant sur un nombre important de numéros d'appel transmis au serveur (4a) sous la forme d'un fichier via une passerelle W.A.P. ou 3G, la réponse présente la forme d'un lien à partir duquel l'utilisateur du terminal (1) doit réaliser une étape (S8a) de téléchargement d'un fichier contenant les réponses propres à chacun des numéros d'appel pour lesquels une identification a été requise. Un fichier doit alors être téléchargé par le terminal (1) de l'utilisateur pour chaque compte provisoire créé. Une fois le fichier téléchargé (S8qa) par l'utilisateur, le compte provisoire est supprimé (S8b) de la mémoire (4b).

Lorsque les réponses propres à chacun des numéros d'appels sont reçues au niveau du terminal (1), l'application SIM Tool Kit ou le logiciel (2) réagit (S9). Lorsque les réponses correspondent à des codes d'erreur ou d'activation de pictogramme, cette réaction peut alors présenter dans un premier temps une étape de décryptage (S9a) des codes de la réponse reçue pour chaque numéro d'appel dont l'opérateur a été recherché. Une fois la réponse décryptée, le pictogramme correspondant au code-réponse reçu est activé (S9b). S'il s'agit d'un code réponse qui correspond à un opérateur, le pictogramme de l'opérateur se trouve alors affiché (S9c) avec le numéro d'appel du correspondant de l'utilisateur. De même, s'il s'agit d'un code d'erreur particulier, un pictogramme spécifique de l'erreur vient s'associer au numéro problématique.

Selon une variante de réalisation, lorsque le numéro pour lequel une demande d'investigation a été demandée est un numéro étranger qui est absent des bases de l'A.E.M.C. national, le code d'erreur peut activer l'affichage d'une adresse de connexion à un A.E.M.C. qui correspond au pays étranger du numéro. D'une façon alternative, le code pays du numéro étranger recherché est discriminé pour être transmis à un équipement supranational A.E.M.I. (Annuaire Externe Mobilité International). Cet équipement est associé ou intègre une table qui comprend les correspondances entre les codes pays et les adresses des A.E.M.C. nationaux avec lesquels l'A.E.M.I. se trouve interconnectée. L'A.E.M.I. envoi alors une requête à l'A.E.M.C. qui correspond au code pays du numéro recherché pour définir l'opérateur du numéro recherché. L'A.E.M.C. répond à la requête par un message contenant au moins un numéro recherché et l'indication par code associé ou non au pictogramme de l'opérateur étranger qui correspond au numéro recherché. Cette information est alors transmise au niveau du serveur d'identification (4c) afin de permettre une mise à jour du sous-compte qui correspond au numéro étranger recherché.

Indépendamment, il peut être envisagé que le pictogramme de l'opérateur du numéro d'appel qui s'affiche se trouve associé au pictogramme du pays de l'opérateur dans le cas où le numéro d'appel correspond à un terminal mobile étranger. Le pictogramme du pays sera alors activé suite à la réception par le terminal (1) d'un code spécifique de l'A.E.M.C. du pays où la correspondance avec le numéro d'appel pour lequel une investigation a été demandée, aura été trouvée.

La mise à jour de la correspondance entre un élément d'identification d'un opérateur et le numéro d'appel d'un correspondant peut être effectuée par l'activation régulière, paramétrée, d'une requête de mise à jour contrôlée par l'application SIM Tool Kit ou un logiciel (2) du terminal (1). Cette mise à jour se réalise alors par l'envoi d'une demande de mise à jour à la plateforme de gestion de façon similaire à l'envoi d'une demande d'investigation habituelle. La mise à jour peut également être incitée régulièrement par l'ouverture d'une fenêtre d'interrogation contrôlée par l'application ou le logiciel du terminal, au niveau du dispositif d'affichage du terminal.

Selon une variante du procédé de mise à jour, le compte provisoire et l'ensemble de ses sous-comptes sont maintenus mémorisés dans le moyen de mémoire de la plateforme de gestion. Lorsque la correspondance entre un numéro d'appel et son opérateur/fournisseur d'accès Internet est mise à jour au niveau d'au moins une des bases de données de l'A.E.M.C., l'élément d'identification de l'opérateur des sous-comptes associés au numéro d'appel dont la correspondance a été mise à jour est alors recherché puis modifié dans tous les sous-comptes dans lesquels il est présent, quel que soit le format de saisie (national ou international). A cet effet, une table de traduction d'un numéro en plusieurs possibilités de formats acceptables, permet de définir les critères de recherches dans les sous-comptes comme autant de chaines de caractères possibles pour effectuer la recherche.

Cette modification intervient au niveau de chacun des sous-comptes du moyen de mémoire associés au numéro d'appel. Au niveau du compte provisoire maintenu qui porte le numéro d'appel de l'utilisateur, la modification de l'élément d'identification dans un des sous-comptes entraîne la transmission du nouvel élément d'identification de l'opérateur vers le terminal dont le numéro d'appel est associé au compte provisoire.

## Revendications

1. Système d'identification de l'opérateur ou du fournisseur d'accès Internet proposant au moins un service de téléphonie d'au moins un numéro d'appel d'un correspondant en mémoire au niveau du terminal (1) d'un utilisateur **caractérisé en ce que** le système comprend :
- au moins un terminal (1) d'un utilisateur comprenant au moins une mémoire (1a, 1b) intégrée ou associée (1c) au terminal (1) comprenant un répertoire de numéros d'appels des correspondants de l'utilisateur,
- une application SIM Tool Kit ou un logiciel (2) intégré au terminal (1) de l'utilisateur et gérant au moins un dispositif d'envoi d'une demande d'identification de l'opérateur ou du fournisseur d'accès Internet du numéro d'appel d'au moins un correspondant et au moins un dispositif de réception d'une réponse à la demande d'identification,
- une plateforme de gestion (4) d'identifications de l'opérateur ou du fournisseur d'accès Internet du numéro d'appel d'au moins un correspondant, cette plateforme (4) comprenant au moins une interface de réception de demandes et une interface d'émission de réponses, ainsi qu'un serveur d'identification (4a) relié à au moins un équipement formant une base de données qui intègre une correspondance entre des numéros d'appel et un opérateur téléphonique ou un fournisseur d'accès Internet,
- un réseau de communication (3) entre les différents composants du système et comprenant un ou plusieurs éléments caractéristiques d'un réseau.

2. Système d'identification d'un opérateur ou d'un fournisseur d'accès Internet selon la revendication 1, **caractérisé en ce que** le terminal (1) comprend un moyen de mémorisation qui intègre une table de correspondance entre un élément de réponse à la demande formant un code représentatif d'au moins un opérateur ou fournisseur d'accès Internet et/ou d'une erreur et un pictogramme.

3. Système d'identification d'un opérateur ou d'un fournisseur d'accès Internet selon une des revendications précédentes, **caractérisé en ce que** la plateforme de gestion d'identifications (4) est muni d'un moyen de mise en attente (4d) des demandes intégrant un moyen de mémorisation temporaire de type F.I.F.O. (*First In First Out*).

4. Système d'identification d'un opérateur ou d'un fournisseur d'accès Internet selon une des revendications 1 ou 2, **caractérisé en ce que** le serveur d'identifications (4a) comprend un dispositif de création de comptes et/ou de sous-comptes provisoires dans un moyen de mémorisation (4b), ces comptes et/ou sous-comptes, respectivement associés à une requête, sont définis d'une part par le numéro d'appel du correspondant dont l'utilisateur souhaite connaître l'opérateur ou le fournisseur d'accès Internet et d'autre part par le numéro d'appel de l'utilisateur vers lequel retourner une réponse à la requête.

5. Système d'identification d'un opérateur ou d'un fournisseur d'accès Internet selon une des revendications précédentes, **caractérisé en ce que**, le réseau de communication (3) comprenant un S.M.S.-C (*Short Message Service Center*) qui assure la communication entre le terminal (1) de l'utilisateur et la plateforme de gestion d'identifications (4), l'application SIM Tool Kit ou le logiciel (2) du terminal (1) de l'utilisateur est associée à un moyen de rédaction d'un S.M.S. contenant le numéro d'un correspondant de l'utilisateur dont l'opérateur ou le fournisseur d'accès Internet est à identifier.

6. Système d'identification d'un opérateur ou d'un fournisseur d'accès Internet selon une des revendications 1 à 4, **caractérisé en ce que**, le réseau (3) comprenant un dispositif passerelle de gestion de communication W.A.P. (*Wireless Application Protocol*) ou 3G qui permette d'assurer la communication entre le terminal (1) de l'utilisateur et la plateforme de gestion d'identifications (4), l'application SIM Tool Kit ou le logiciel (2) du terminal (1) de l'utilisateur est associé à un moyen de transfert d'un fichier intégrant au moins un numéro d'un correspondant de l'utilisateur dont l'opérateur ou le fournisseur d'accès Internet est à identifier.

7. Système d'identification d'un opérateur ou d'un fournisseur d'accès Internet selon une des revendications précédentes, **caractérisé en ce que**, la base de données constituée de l'ensemble des correspondances, pour au moins un pays, entre des numéros d'appels et leur opérateur ou fournisseur d'accès Internet respectif en charge du contrat intégrant ce numéro d'appel formant une A.E.M.C. (Annuaire Externe Mobilité Commun), l'A.E.M.C. est associé à un dispositif (4c1) comprenant :
- une interface de réception d'une requête associée à un compte provisoire transmise par le serveur d'identifications,
- un moyen d'investigation dans au moins une base de données de l'A.E.M.C. (4c),
- un moyen de rédaction d'une réponse à la requête reçue, et
- une interface de transmission d'une réponse rédigée au compte provisoire du serveur d'identifications qui correspond à la requête.

8. Système d'identification d'un opérateur ou d'un fournisseur d'accès Internet selon au moins la revendication 4 et éventuellement une des revendications 6 et 7, **caractérisé en ce que** le serveur d'identifications (4a) comprend un moyen de contrôle du traitement de l'ensemble des requêtes correspondant à un même compte provisoire, ce moyen de contrôle comprenant au moins un compteur du nombre d'entrées/sorties des requêtes de l'A.E.M.C. (4c).

9. Système d'identification d'un opérateur ou d'un fournisseur d'accès Internet selon une des revendications précédentes, **caractérisé en ce que** la réponse à la demande d'identification, qui est transmise au terminal depuis la plateforme de gestion d'identifications, comprend au moins un code d'identification de l'opérateur ou du fournisseur d'accès internet et/ou un pictogramme d'identification du même opérateur/fournisseur d'accès Internet.

10. Procédé d'identification de l'opérateur ou du fournisseur d'accès Internet d'au moins un numéro d'appel d'un correspondant en mémoire au niveau du terminal (1) d'un utilisateur mettant en jeu un système d'identification selon une des revendications 1 à 9, **caractérisé en ce que** le procédé comprend au moins :
- une étape (S1) de sélection d'au moins un numéro d'appel d'un correspondant dont l'opérateur ou le fournisseur d'accès Internet doit être déterminé,
- une étape (S3), gérée par l'application SIM Tool Kit ou le logiciel (2), d'envoi d'une demande d'identification de l'opérateur ou du fournisseur d'accès Internet d'au moins un numéro d'appel d'un correspondant de l'utilisateur depuis le terminal (1) de l'utilisateur,
- une étape (S4) de réception de la demande au niveau de la plateforme de gestion (4) d'identifications de l'opérateur ou du fournisseur d'accès Internet,
- une étape d'analyse de la demande au niveau de la plateforme de gestion d'identifications.
- une étape (S8) d'envoi d'une réponse à la demande d'identification de l'opérateur ou du fournisseur d'accès Internet depuis la plateforme de gestion (4) d'identifications vers le terminal (1) de l'utilisateur,
- une étape (S9) de réaction de l'application SIM Tool Kit ou du logiciel (2) du terminal (1) de l'utilisateur.

11. Procédé d'identification d'un opérateur ou d'un fournisseur d'accès Internet selon la revendication 10, **caractérisé en ce que**, le procédé comprend :
- une étape (S2), gérée par l'application SIM Tool Kit ou par le logiciel (2), de rédaction d'une demande d'identification de l'opérateur ou du fournisseur d'accès Internet d'au moins un numéro d'appel d'un correspondant sélectionné par l'utilisateur, cette demande, formée par un message ou fichier, comprenant au moins le numéro du terminal (1) de l'utilisateur,
- une étape (S7) de rédaction d'une réponse à la demande d'identification au niveau de la plateforme de gestion (4) d'identifications.

12. Procédé d'identification d'un opérateur ou d'un fournisseur d'accès Internet selon une des revendications précédentes, **caractérisé en ce que**, l'étape d'analyse de la demande au niveau de la plateforme de gestion (4) comprend :
- une étape (S5) de gestion de la demande au niveau de la plateforme de gestion (4) définissant une requête pour chaque numéro d'appel dont l'opérateur ou le fournisseur d'accès Internet est à identifier,
- une étape (S6) de traitement d'au moins une requête au niveau d'au moins une base de données constituée de l'ensemble des correspondances, pour une pays donné, entre des numéros d'appels et leur opérateur ou fournisseur d'accès Internet respectif,

13. Procédé d'identification d'un opérateur ou d'un fournisseur d'accès Internet selon la revendication 12, **caractérisé en ce que**, la demande envoyée depuis le terminal (1) portant pour plusieurs numéros d'appel, l'étape (S5) de gestion de la demande comprend :
- une étape (S5a1) de création d'un compte provisoire au niveau d'un moyen de mémorisation (4b) associé au serveur d'identifications (4a) pour chaque numéro d'utilisateur effectuant une demande,
- une étape (S5a2) de création d'au moins un sous-compte provisoire pour chaque numéro d'appel d'un correspondant pour lequel l'opérateur ou le fournisseur d'accès Internet est à identifier,
- une étape (S5a3) de définition d'une requête d'investigation pour chaque numéro d'appel associé à un sous-compte,
- une étape (S5a4) de transmission de la requête à l'A.E.M.C. (4c) qui gère le traitement de la requête au niveau d'au moins une base de données constituée de l'ensemble des correspondances, pour un pays donné, entre des numéros d'appel et leur opérateur ou fournisseur d'accès Internet respectif.

14. Procédé d'identification d'un opérateur ou d'un fournisseur d'accès Internet selon la revendication 12, **caractérisé en ce que**, la demande envoyée depuis le terminal (1) portant pour un seul numéro d'appel, l'étape de gestion (S5) du procédé comprend :
- une étape (S5b1) de mise en attente de la demande au niveau d'un moyen de mémorisation tampon (4d) de type F.I.F.O.,
- une étape (S5b2) de définition d'une requête d'investigation pour le numéro d'appel en attente de traitement,
- une étape (S5b3) de transmission de la requête à l'A.E.M.C. (4c) qui gère le traitement de la requête.

15. Procédé d'identification d'un opérateur ou d'un fournisseur d'accès Internet selon une des revendications précédentes, **caractérisé en ce que** l'étape (S6) de traitement de la requête au niveau de l'A.E.M.C. (4c) comprend :
- une étape (S6a) d'investigation dans la base de données constituée de l'ensemble des correspondances entre les numéros d'appels et leur opérateur ou fournisseur d'accès Internet respectif pour retrouver l'opérateur ou le fournisseur d'accès Internet du numéro d'appel qui correspond à la requête,
- une étape (S6b) de rédaction d'une réponse à la requête comprenant élément d'identification ou d'erreur associé au numéro d'appel traité,
- une étape (S6c) de transmission de la réponse au compte provisoire du serveur d'identifications (4a).

16. Procédé d'identification d'un opérateur ou d'un fournisseur d'accès Internet selon la revendication 12 et éventuellement selon la revendication 14, **caractérisé en ce que** les étapes de gestion (S5) de la demande et de traitement (S6) de la requête sont réalisées concomitamment à une étape (S10) de contrôle du traitement de l'ensemble des requêtes correspondant à un même compte provisoire, cette étape (S10) de contrôle comprenant au moins une étape de comptage des requêtes transmises à l'A.E.M.C. (4c) et des réponses reçues de l'A.E.M.C. (4c).

17. Procédé d'identification d'un opérateur ou d'un fournisseur d'accès Internet selon une revendication parmi les revendications 10, 11, 12, 14 et 15, **caractérisé en ce que** l'étape (S8) d'envoi d'une réponse depuis la plateforme de gestion d'identifications (4) vers le terminal (1) de l'utilisateur consiste en l'envoi d'un élément de type S.M.S. à l'application SIM Tool Kit ou au logiciel (2).

18. Procédé d'identification d'un opérateur ou d'un fournisseur d'accès Internet selon une des revendications 10, 11, 12, 13, 15 et 16, **caractérisé en ce que** l'étape (S8) d'envoi d'une réponse depuis la plateforme de gestion d'identifications (4) vers le terminal (1) de l'utilisateur concerne l'envoi d'un lien accessible depuis le terminal (1) muni d'une connexion W.A.P. ou 3G, cette étape est alors suivie par :
- une étape (S8a) de téléchargement par le terminal (1) de l'utilisateur d'un fichier comprenant au moins un élément de réponse correspondant à un numéro d'appel de correspondant pour lequel une recherche d'opérateur ou de fournisseur d'accès internet a été effectuée,
- une étape (S8b) d'effacement du compte provisoire du moyen mémoire (4b) de la plateforme de gestion (4).

19. Procédé d'identification d'un opérateur ou d'un fournisseur d'accès Internet selon une des revendications précédentes, **caractérisé en ce que**, l'élément de réponse pour chaque numéro d'appel pour lequel une recherche a été effectuée forme un code accompagné ou non d'un pictogramme représentatif d'un opérateur ou d'un fournisseur d'accès Internet et/ou d'une erreur, l'étape (S9) de réaction de l'application SIM Tool Kit ou du logiciel (2) comprend :
- une étape d'enregistrement (S9a) du code et du pictogramme correspondant reçus comme réponse pour chaque numéro d'appel dont l'opérateur ou le fournisseur d'accès Internet a été recherché, le pictogramme n'étant pas encore enregistré dans un moyen de mémorisation de la carte SIM, du logiciel ou du terminal, ou
- une étape de décryptage (S9a bis) du code reçu comme réponse pour chaque numéro d'appel dont l'opérateur ou le fournisseur d'accès Internet a été recherché, le code correspondant à un pictogramme enregistré dans un moyen de mémorisation de la carte SIM, du logiciel ou du terminal, et
- une étape (S9b) d'activation d'un pictogramme correspondant à un code-réponse lié à un numéro d'appel,
- une étape (S9c) d'affichage au niveau du terminal (1) d'au moins un pictogramme correspondant à l'opérateur ou au fournisseur d'accès Internet du numéro d'appel pour lequel une réponse a été reçue.

20. Procédé d'identification d'un opérateur ou d'un fournisseur d'accès internet selon une des revendications précédentes, **caractérisé en ce que**, l'élément de réponse pour chaque numéro d'appel pour lequel une recherche a été effectuée forme un pictogramme représentatif d'un opérateur/fournisseur d'accès internet ou représentatif d'une erreur, l'étape de réaction de l'application SIM Tool Kit ou du logiciel comprend :
- une étape d'affichage (S9c) au niveau du terminal d'au moins un pictogramme correspondant à l'opérateur ou au fournisseur d'accès Internet du numéro d'appel pour lequel une réponse a été reçue ou affichage d'un message, d'un code et/ou d'un pictogramme d'erreur.

21. Procédé d'identification d'un opérateur ou d'un fournisseur d'accès internet selon une des revendications précédentes, **caractérisé en ce que**, lorsque le numéro pour lequel une demande d'investigation a été demandée est un numéro étranger qui est absent des bases de l'A.E.M.C. national, le code d'erreur est remplacé par une adresse de connexion à un A.E.M.C. qui correspond au pays étranger du numéro.

22. Procédé d'identification d'un opérateur ou d'un fournisseur d'accès internet selon une des revendications 10 à 21, **caractérisé en ce que**, le numéro pour lequel une demande d'investigation a été demandée étant un numéro étranger absent des bases de l'A.E.M.C. national, le procédé comprend :
- une étape de discrimination du code pays du numéro recherché,
- une étape de transmission du code pays du numéro recherché à un équipement supranational A.E.M.I. (Annuaire Externe Mobilité International) intégrant une table qui comprend les correspondance entre les codes pays et les adresses des A.E.M.C. nationaux, l'A.E.M.I. étant interconnecté avec l'ensemble des A.E.M.C. nationaux,
- une étape de rédaction et d'envoi par l'A.E.M.I. d'une requête à l'A.E.M.C. qui correspond au code pays du numéro recherché,
- une étape de rédaction et d'envoi d'une réponse par l'A.E.M.C.
à la requête de l'A.E.M.I., la réponse contenant au moins un numéro recherché et l'indication par code associé ou non au pictogramme de l'opérateur étranger qui correspond au numéro recherché,
- une étape de mise à jour du sous-compte correspondant au numéro étranger recherché.

23. Procédé d'identification d'un opérateur ou d'un fournisseur d'accès internet selon une des revendications précédentes, **caractérisé en ce que**, le compte provisoire étant conservé dans le moyen mémoire (4b) de la plateforme de gestion (4), le procédé comprend au moins :
- une étape de mise à jour de la correspondance entre un numéro et son opérateur/fournisseur d'accès internet au niveau d'au moins une des bases de données de l'A.E.M.C.
- une étape de recherche des différents formats pour le numéro dont l'opérateur à été mis à jour, faisant intervenir une table de traduction d'un numéro en plusieurs possibilités de formats de saisi reconnus,
- une étape de recherche d'au moins un sous-compte correspondant à un numéro dont l'opérateur à été mis à jour dans un format de saisi reconnu,
- une étape de modification de l'élément d'identification de l'opérateur du sous-compte associé à un numéro d'appel dont la correspondance a été mise à jour,
- une étape de transmission du nouvel élément d'identification de l'opérateur au terminal (1) dont le numéro est associé au compte provisoire.

## Claims

1. System for identification of the operator or the Internet access provider offering at least one telephony service for at least one call number of a contact memorised in the terminal (1) of a user, **characterised in that** the system comprises:
- at least one user terminal (1) comprising at least one memory (1a, 1b) integrated in or associated (1c) with the terminal (1) comprising a directory of call numbers of the user's contacts.
- a SIM Tool Kit application or software (2) integrated in the user terminal (1) and managing at least one device for sending a request for identification of the operator or Internet access provider of the call number of at least one contact, and at least one device for receiving a reply to the identification request,
- a management platform (4) for identifications of the operator or the Internet access provider of the call number of at least one contact, this platform (4) comprising at least one interface for receiving requests and one interface for transmitting replies, and an identification server (4a) linked to at least one item of equipment forming a database which incorporates matched associations between call numbers and a telephony operator or an Internet access provider,
- a communication network (3) between the different components of the system and comprising one or more characteristic elements of a network.

2. System for identification of an operator or an Internet access provider as claimed in Claim 1, **characterised in that** the terminal (1) comprises a memory means which incorporates a table of correspondence between an element of reply to a request, in the form of a code representing at least one operator or Internet access provider and/or an error and a pictogram.

3. System for identification of an operator or Internet access provider as claimed in Claim 1, **characterised in that** the identification management platform (4) is provided with a means (4d) for placing requests on standby, incorporating a temporary memory means of the F.I.F.O. type (*(First In First Out).*

4. System for identification of an operator or an Internet access provider as claimed in either one of Claims 1 or 2, **characterised in that** the identification server (4a) comprises a device for creation of provisional accounts and/or sub-accounts in a memory means (4b), and these accounts and/or sub-accounts, respectively associated with a request, are defined firstly by the call number of the contact for which the user wishes to know the operator or Internet access provider, and secondly by the call number of the user to which a reply to the request is to be sent.

5. System for identification of an operator or an Internet access provider as claimed in any one of the preceding claims, **characterised in that** if the communication network (3) comprises a S.M.S.-C (*Short Message Service Center*) which ensures the communication between the user terminal (1) and the identification management platform (4), the SIM Tool Kit application or the software (2) of the user terminal (1) is associated with a means for writing a S.M.S. containing the number of a contact of the user of which the operator or Internet access provider is to be identified.

6. System for identification of an operator or an Internet access provider as claimed in any one of Claims 1 to 4, **characterised in that**, if the network (3) comprises a gateway device for management of communication, W.A.P. (Wireless Application Protocol) or 3G which makes it possible to ensure communication between the user terminal (1) and the identification management platform (4), the SIM Tool Kit application or the software (2) of the user terminal (1) is associated with a means for transfer of a file incorporating at least one number of a contact of the user of which the operator or the Internet access provider is to be identified.

7. System for identification of an operator or an Internet access provider as claimed in any one of the preceding claims, **characterised in that** the database consisting of all the matches, for at least one country, between call numbers and their respective operator or Internet access provider in charge of the contract incorporating this call number forming a C.R.M.D. (Common Remote Mobility Directory), the C.R.M.D. is associated with a device (4c1) comprising:
- an interface for receiving a request associated with a provisional account transmitted by the identification server,
- a look-up means for investigation in at least one database of the C.R.M.D. (4c),
- a means for writing a reply to the received request, and
- an interface for transmission of a written reply to the provisional account of the identification server which corresponds to the request.

8. System for identification of an operator or an Internet access provider as claimed in at least Claim 4 and possibly either of Claims 6 and 7, **characterised in that** the identification server (4a) comprises a means for control of the processing of all the requests corresponding to one and the same provisional account, this control means comprising at least one counter of the number of C.R.M.D. request inputs/outputs (4c).

9. System for identification of an operator or an Internet access provider as claimed in any one of the preceding claims, **characterised in that** the reply to the identification request, which is transmitted to the terminal from the identification management platform, comprises at least one code for identification of the operator or of the Internet access provider, and/or a pictogram for identification of the same operator/Internet access provider.

10. Method for identification of an operator or an Internet access provider of at least one call number of a contact in memory in a user terminal (1) implementing an identification system as claimed in any one of Claims 1 to 9, **characterised in that** the method comprises at least:
- a step (S1) of selection of at least one call number of a contact of which the operator or the Internet access provider is to be determined,
- a step (S3), managed by the SIM Tool Kit application or the software (2), of sending a request for identification of the operator or the Internet access provider of at least one call number of a contact of the user from the user terminal (1),
- a step (S4) of receiving the request at the platform (4) for managing identifications of the operator or the Internet access provider.
- a step of analysis of the request at the identification management platform,
- a step (S8) of sending a reply to the request for identification of the operator or the Internet access provider sent from the identification management platform (4) to the user terminal (1),
- a step (S9) of reaction of the SIM Tool Kit application or the software (2) of the user terminal (1).

11. Method of identification of an operator or an Internet access provider as claimed in Claim 10, **characterised in that** the method comprises:
- a step (S2), managed by the SIM Tool Kit application or by the software (2), of writing a request for identification of the operator or the Internet access provider of at least one call number of a contact selected by the user, this request formed by a message or file comprising at least the number of the user terminal (1),
- a step (S7) of writing a reply to the identification request at the identification management platform (4),

12. Method of identification of an operator or an Internet access provider as claimed in any one of the preceding claims, **characterised in that** the step of analysis of the identification request at the management platform (4) comprise:
- a step (S5) of management of the identification request at the management platform (4) defining a request for each call number of which the operator or the Internet access provider is to be identified,
- a step (S6) of processing at least one request in at least one database consisting of all the matches, for a given country, between call numbers and their respective operator or Internet access provider.

13. Method of identification of an operator or an Internet access provider as claimed in Claim 12, **characterised in that**, if the identification request sent from the terminal (1) concerns several call numbers, the step (S5) for management of the request comprises:
- a step (S5a1) of creating a provisional account in a memory means (4b) associated with the identification server (4a) for each user number making a request,
- a step (S5a2) of creating at least one provisional sub-account for each call number of which the operator or the Internet access provider is to be identified,
- a step (S5a3) of definition of a look-up request for each call number associated with a sub-account,
- a step (S5a4) of transmission of the request to the C.R.M.D. (4c) which manages the processing of the request in at least one database consisting of all the matches, for a given country, between call numbers and their respective operator or Internet access provider.

14. Method for identification of an operator or an Internet access provider as claimed in Claim 12, **characterised in that**, if the identification request sent from the terminal (1) only concerns a single call number, the management step (S5) of the method comprises:
- a step (S5b1) of placing the request on standby in buffer memory means (4d) of the F.I.F.O. type,
- a step (S5b2) of defining a look-up request for the call number awaiting processing,
- a step (S5b3) of transmission of the request to the C.R.M.D. (4c) which manages the processing of the request.

15. Method for identification of an operator or an Internet access provider as claimed in any one of the preceding claims, **characterised in that** the step (S6) of processing the request at the C.R.M.D. (4c) comprises:
- a look-up step (S6a) in the database consisting of all the matches between call numbers and their respective operator or Internet access provider, to find the operator or the Internet access provider of the call number corresponding to the request,
- a step (S6b) of writing a reply to the look-up request comprising an identification or error element associated with the processed call number,
- a step (S6c) of transmitting the reply to the provisional account of the identification server (4a).

16. Method of identification of an operator or an Internet access provider as claimed in Claim 12 and possibly as claimed in Claim 14, **characterised in that** the steps of management (S5) and processing (S6) of the request are carried out concomitantly with a step (S10) of controlling the processing of all the requests corresponding to one and the same provisional account, this control step (S10) comprising at least one step of counting the requests transmitted to the C.R.M.D. 4c) and the replies received from the C.R.M.D. (4c).

17. Method of identification of an operator or an Internet access provider as claimed in any one of Claims 10, 11, 12, 14 and 15, **characterised in that** the step (S8) of sending a reply from the identification management terminal (4) to the user terminal (1) consists of sending an element of the S.M.S. type to the SIM Tool Kit application or software (2).

18. Method of identification of an operator or an Internet access provider as claimed in any one of Claims 10, 11, 12, 13, 15 and 16, **characterised in that** the step (S8) of sending a reply from the identification management platform (4) to the user terminal (1) concerns the sending of a link which is accessible from the terminal (1) equipped with a W.A.P. or 3G connection, this step then being followed by:
- a step (S8a) of downloading by the user terminal (1) of a file comprising at least one reply element corresponding to a call number of a contact for which a search for the operator or the Internet access provider has been made,
- a step (S8b) of deleting the provisional account from the memory means (4b) of the management platform (4).

19. Method of identification of an operator or an Internet access provider as claimed in any one of the preceding claims, **characterised in that** the reply element for each call number for which a search has been made forms a code which is or is not accompanied by a pictogram representing an operator or an Internet access provider and/or an error, the reaction step (S9) of the SIM Tool Kit application or of the software (2) comprising:
- a step (S9a) of recording the code and the corresponding pictogram received as a reply for each call number of which the operator or the Internet access provider was searched, the pictogram not yet being recorded in a memory means of the SIM card, of the software or of the terminal, or
- a step (S9a bis) of decryption of the code received as a reply for each call number of which the operator or the Internet access provider has been searched, the code corresponding to a pictogram recorded in a memory means of the SIM card, of the software or of the terminal,
- a step (S9b) of activating a pictogram corresponding to a reply code linked to a call number,
- a step (S9c) of displaying at the terminal (1) at least one pictogram corresponding to the operator or the Internet access provider of the call number for which a reply has been received.

20. Method of identification of an operator or anInternet access provider as claimed in any one of the preceding claims, **characterised in that** the reply element for each call number for which a search has been made forms a pictogram representing an operator/Internet access provider or representing an error, the reaction step of the SIM Tool Kit application or of the software comprising:
- a step of displaying (S9c) at the terminal at least one pictogram corresponding to the operator or the Internet access provider of the call number for which a reply has been received, or displaying a message, a code and/or an error pictogram.

21. Method of identification of an operator or anInternet access provider as claimed in any one of the preceding claims, **characterised in that** if the number for which a look-up request has been made is a foreign number not included in the national C.R.M.D. bases, the error code is replaced by an address for connection to a C.R.M.D. which corresponds to the foreign country of the number.

22. Method of identification of an operator or an Internet access provider as claimed in any one of Claims 10 to 21, **characterised in that** if the number for which a look-up request is made is a foreign number not included in national C.R.M.D. bases, the method comprises:
- a step of discriminating the country code of the searched number,
- a step of transmitting the country code of the searched number to supranational I.M.R.D. (International Remote Mobility Directory) equipment incorporating a table which comprises the matches between country codes and national C.R.M.D. addresses, the I.M.R.D. being interconnected with all national C.R.M.D.s,
- a step of writing and sending a request by the I.M.R.D. to the C.R.M.D. corresponding to the country code of the searched number,
- a step of writing and sending a reply by the C.R.M.D. to the request from the I.M.R.D., the reply containing at least one searched number and the coded indication, associated or not associated with a pictogram, of the foreign operator which corresponds to the searched number,
- a step of updating the sub-account corresponding to the searched foreign number.

23. Method of identification of an operator or Internet access provider as claimed in any one of the preceding claims, **characterised in that** if the provisional account is held in the memory means (4b) of the management platform (4), the method comprises at least:
- a step of updating the match between a number and the operator/Internet access provider thereof in at least one of the databases of the C.R.M.D.,
- a step of searching different formats for the number of which the operator has been updated, using a table for translation of a number into several possibilities for known entry formats,
- a step of searching at least one sub-account corresponding to a number of which the operator has been updated in a recognised entry format,
- a step of modifying the identification element for the operator of the sub-account associated with a call number of which the match has been updated,
- a step of transmitting the new operator identification element to the terminal (1) of which the number is associated with the provisional account.

## Patentansprüche

1. System zur Erkennung des Betreibers oder des Internetproviders, der zumindest einen Telefondienst von zumindest einer Rufnummer eines Teilnehmers bietet, die in dem Terminalserver (1) eines Benutzers gespeichert ist, **dadurch gekennzeichnet, dass** das System Folgendes aufweist:
- zumindest einen Terminalserver (1) eines Benutzers, der zumindest eine Speichereinheit (1 a, 1 b) umfasst, die in den Terminalserver (1) integriert ist oder mit diesem verbunden ist (1 c), und die ein Rufnummernverzeichnis der Teilnehmer des Benutzers umfasst,
- eine SIM Tool Kit - Anwendung oder eine Software (2), die in den Terminalserver des Benutzers integriert ist und die zumindest eine Vorrichtung zum Senden einer Anfrage zum Identifizieren des Betreibers oder des Internetproviders der Rufnummer mindestens eines Teilnehmers und mindestens eine Empfangsvorrichtung für eine Antwort auf die Identifikationsanfrage verwaltet,
- eine Verwaltungsplattform (4) für die Erkennung des Betreibers oder des Internetproviders der Rufnummer mindestens eines Teilnehmers, wobei diese Plattform (4) zumindest eine Schnittstelle zur Aufnahme der Anfragen und eine Schnittstelle zur Ausgabe von Antworten umfasst, sowie einen Identifikationsserver (4a), der mit mindestens einem Gerät verbunden ist, das die Datenbank bildet, die eine Korrespondenz zwischen den Rufnummern und dem Telefonbetreiber oder dem Internetprovider integriert,
- ein Kommunikationsnetz (3) zwischen den verschiedenen Systemteilen, das eines oder mehrere charakteristische Elemente eines Netzes aufweist.

2. System zur Erkennung eines Betreibers oder eines Internetproviders nach Anspruch 1, **dadurch gekennzeichnet, dass** der Terminalserver (1) ein Speichermittel aufweist, das eine Korrsespondenztabelle zwischen einem Antwortelement auf eine Anfrage, in Form eines Codes, der zumindest einen Betreiber oder einen Internetprovider und/oder einen Fehler und ein Piktogramm bildet.

3. System zur Erkennung eines Betreibers oder eines Internetproviders nach einem der vorangegangenen Ansprüche, **dadurch gekennzeichnet, dass** die Plattform zur Verwaltung der Identifizierung (4) mit einem Mittel zur Bereitstellung von Anfragen ausgestattet ist, die ein temporäres Speichermittel des Typs F.I.F.O (First in First Out) einbeziehen.

4. System zur Erkennung eines Betreibers oder eines Internetproviders nach einem der Ansprüche 1 oder 2, **dadurch gekennzeichnet, dass** der Identifikationsserver (4a) eine Vorrichtung zur Erstellung von Konten und/oder provisorischen Unter-Konten in einem Speicherungsmittel (4b) aufweist, wobei diese Konten und/oder Unter-Konten, die jeweils mit einer Eingabe verbunden sind, einerseits durch die Rufnummer des Teilnehmers definiert ist, deren Benutzer wünscht, den Betreiber oder den Internetprovider zu kennen und andererseits durch die Rufnummer des Benutzers zu dem eine Antwort auf die Eingabe zurückgesandt wird.

5. System zur Erkennung eines Betreibers oder eines Internetproviders nach einem der vorangegangenen Ansprüche, **dadurch gekennzeichnet, dass** das Kommunikationsnetz (3) einen S.M.S.-C (Short Message Service Center) aufweist, der die Kommunikation zwischen dem Terminalserver (1) des Benutzers und der Plattform zur Verwaltung der Identifizierung (4) gewährleistet, wobei die Anwendung SIM Tool Kit oder die Software (2) des Terminalservers (1) des Benutzers mit einem Mittel zur Ausfertigung einer S.M.S., welche die Nummer des Teilnehmers des Benutzers, dessen Betreiber oder Internetprovider identifiziert werden muss, verbunden ist

6. System zur Erkennung eines Betreibers oder eines Internetproviders nach einem der Ansprüche 1 bis 4, **dadurch gekennzeichnet, dass** das Netz (3) ein Bindeglied zur Kommunikationsverwaltung W.A.P. (Wireless Application Protocol) oder 3G aufweist, das es erlaubt die Kommunikation zwischen dem Terminalserver (1) des Benutzers und der Plattform zur Identifikationsverwaltung (4) sicherzustellen, wobei die Anwendung SIM Tool Kit oder die Software (2) des Terminalservers (1) des Benutzers mit einem Transfermittel einer Datei verbunden ist, das mindestens eine Nummer eines Teilnehmers des Benutzers integriert, dessen Betreiber oder Internetprovider identifiziert werden muss.

7. System zur Erkennung eines Betreibers oder eines Internetproviders nach einem der vorangegangenen Ansprüche, **dadurch gekennzeichnet, dass** die Datenbank aus einer Gesamtheit von Korrespondenz besteht, für mindestens ein Land, zwischen den Rufnummern und ihrem jeweiligen vertraglichen Betreiber oder Internetprovider, welche die Rufnummer integriert, indem sie eine A.E.M.C. (Annuaire Externe Mobilité Commun) bilden, wobei die A.E.M.C. mit einer Vorrichtung (4c1) verbunden ist, die Folgendes aufweist:
- eine Schnittstelle zur Aufnahme einer Eingabe, die mit einem provisorischen Konto verbunden ist, die durch den Identifikationsserver übertragen worden ist;
- ein Mittel zur Untersuchung von mindestens einer Datenbank der A.E.M.C. (4c);
- ein Mittel zur Ausfertigung einer Antwort auf die empfangene Eingabe, und
- eine Übertragungsschnittstelle einer Antwort, die auf das provisorische Konto des Identifikationsserver redigiert wurde, der der Eingabe entspricht.

8. System zur Erkennung eines Betreibers oder eines Internetproviders zumindest nach Anspruch 4 und gegebenenfalls nach einem der Ansprüche 6 und 7, **dadurch gekennzeichnet, dass** der Identifikationsserver (4a) ein Kontrollmittel zur Behandlung der Gesamtheit an Eingaben aufweist, die dem gleichen provisorischen Konto entsprechen, wobei dieses Kontrollmittel zumindest einen Zähler der Anzahl an eingehenden Eingaben und ausgehenden Eingaben der A.E.M.C. (4c) aufweist.

9. System zur Erkennung eines Betreibers oder eines Internetproviders nach zumindest einem der vorangegangenen Ansprüche, **dadurch gekennzeichnet, dass** die Antwort auf die Identifikationsanfrage, die ausgehend von der Plattform zur Verwaltung von Identifikationen an den Terminalserver übertragen wird, mindestens einen Identifikationscode des Betreibers oder des Internetproviders und/oder ein Piktogramm zur Identifizierung des gleichen Betreibers/internetproviders aufweist.

10. Verfahren zur Erkennung des Betreibers oder des Internetproviders mindestens einer Rufnummer eines Teilnehmers, der in einem Terminalserver (1) eines Benutzers gespeichert ist, indem ein Identifikationssystem nach einem der Ansprüche 1 bis 9 in Einsatz gebracht wird, **dadurch gekennzeichnet, dass** das Verfahren mindestens aufweist:
- einen Schritt (S1) der Auswahl mindestens einer Rufnummer eines Teilnehmers dessen Betreiber oder Internetprovider bestimmt werden muss;
- einen Schritt (S3), der durch die SIM Tool Kit - Anwendung oder die Software (2) verwaltet wird, zur Ausgabe einer Identifikationsanfrage des Betreibers oder Internetproviders mindestens einer Rufnummer eines Teilnehmers des Benutzers ausgehend von dem Terminalserver (1) des Benutzers;
- einen Schritt (S4) des Erhaltens der Anfrage in Bezug auf die Plattform zur Verwaltung (4) von Identifikationen des Betreibers oder des Internetproviders;
- einen Schritt der Analyse der Anfrage in Bezug auf die Plattform zur Verwaltung von Identifikationen;
- einen Schritt (S8) zum Aussenden einer Antwort auf die Identifikationsanfrage des Betreibers oder Internetproviders ausgehend von der Plattform zur Verwaltung (4) von Identifikationen zu dem Terminalserver (1) des Benutzers;
- einen Schritt (S9) der Reaktion der SIM Tool Kit - Anwendung oder der Software (2) des Terminalservers (1) des Benutzers.

11. Verfahren zur Erkennung eines Betreibers oder Internetproviders nach Anspruch 10, **dadurch gekennzeichnet, dass** das Verfahren Folgendes aufweist:
- einen Schritt (S2), der durch die SIM Tool Kit - Anwendung oder die Software (2) verwaltet wird, zur Ausfertigung einer Identifikationsanfrage des Betreibers oder Internetproviders mindestens einer Rufnummer eines Teilnehmers, der von dem Benutzer ausgewählt wurde, wobei diese Anfrage, die von einer Nachricht oder einer Datei gebildet wird, mindestens eine Nummer des Terminalservers (1) des Benutzers aufweist;
- einen Schritt (S7) zur Ausfertigung einer Antwort auf die Identifikationsanfragen in Bezug auf die Plattform zur Verwaltung (4) von Identifikationen.

12. Verfahren zur Erkennung eines Betreibers oder eines Internetproviders nach einem der vorangegangenen Ansprüche, **dadurch gekennzeichnet, dass** der Schritt der Analyse der Anfrage in Bezug auf die Plattform zur Verwaltung (4) aufweist:
- einen Schritt (S5) zur Verwaltung der Anfrage in Bezug auf die Plattform für Verwaltung (4), welche eine Eingabe für jede Rufnummer, deren Betreiber oder Internetprovider identifiziert werden muss, definiert;
- einen Schritt (S6) zum Behandeln mindestens einer Eingabe in Bezug auf mindestens eine Datenbank, die aus der Gesamtheit der Korrespondenz gebildet ist, für ein angegebenes Land, zwischen den Rufnummern und ihrem jeweiligen Betreiber oder Internetprovider.

13. Verfahren zur Erkennung eines Betreibers oder eines Internetproviders nach Anspruch 12, **dadurch gekennzeichnet, dass** der Schritt (S5) zur Verwaltung der Anfrage Folgendes umfasst, wobei die Anfrage, vom Terminalserver (1) für mehrere Rufnummern ausgegeben wird:
- ein Schritt (S5a1) zur Erstellung eines provisorischen Kontos in Bezug auf ein Speichermittel (4b), welches mit dem Identifikationsserver (4a) verbunden ist, für jede Nummer eines Benutzers, der eine Anfrage ausführt,
- ein Schritt (S5a2) zur Erstellung mindestens eines provisorischen Unter-Kontos für jede Rufnummer eines Teilnehmers für den ein Betreiber oder ein Internetprovider identifiziert werden muss;
- ein Schritt (S5a3) zur Definition einer Eingabe zur Untersuchung jeder Rufnummer, welche mit einem Unter-Konto verbunden ist;
- ein Schritt (S5a4) der Übertragung der Eingabe an die A.E.M.C. (4c), der die Behandlung der Eingabe in Bezug auf mindestens eine Datenbank verwaltet, die aus der Gesamtheit an Korrespondenz gebildet wird, für ein angegebenes Land, zwischen den Rufnummern und dem jeweiligen Betreiber oder Internetprovider.

14. Verfahren zur Erkennung eines Betreibers oder Internetproviders nach Anspruch 12, **dadurch gekennzeichnet, dass**, wenn die Anfrage, die von dem Terminalserver (1) ausgegeben wurde, nur eine einzige Rufnummer betrifft, der Schritt des Verwaltens (S5) des Verfahrens Folgendes aufweist:
- einen Schritt (S5b1) des Setzens der Anfrage auf die Warteliste in Bezug auf ein Speichermittel (4d) der Art F.I.F.O.,
- einen Schritt (S5b2) der Definition einer Eingabe zur Untersuchung für die Rufnummer, die auf die Verarbeitung wartet,
- einen Schritt (S5b3) der Übertragung der Eingabe an die A.E.M.C. (4c), der die Behandlung der Eingabe verwaltet.

15. Verfahren zur Erkennung eines Betreibers oder Internetproviders nach einem der vorangegangenen Ansprüche, **dadurch gekennzeichnet, dass** der Schritt (S6) der Behandlung der Eingabe in Bezug auf die A.E.M.C. Folgendes aufweist:
- einen Schritt (S6a) der Untersuchung in der Datenbank, die sich aus der Gesamtheit der Korrespondenz zusammensetzt, zwischen den Rufnummern und dem jeweiligen Betreiber oder Internetprovider, um den Betreiber oder Internetprovider der Rufnummer wiederzufinden, der der Eingabe entspricht;
- einen Schritt (S6b) zur Ausfertigung einer Antwort auf die Eingabe, die das Identifikationselement oder das Fehlerelement aufweist, das mit der behandelten Rufnummer verbunden ist,
- einen Schritt (S6c) der Übertragung der Antwort auf das provisorische Konto des Identifikationsservers (4a).

16. Verfahren zur Erkennung eines Betreibers oder eines Internetproviders nah Anspruch 12 und gegebenenfalls nach Anspruch 14, **dadurch gekennzeichnet, dass** die Schritte der Verwaltung (S5) der Anfrage und der Behandlung (S6) der Eingabe gleichzeitig in einem Schritt (S10) der Kontrolle der Behandlung des Gesamtheit der Eingaben auftreten, die dem gleichen provisorischen Konto entsprechen, wobei dieser Kontrollschritt (S10) mindestens einen Schritt des Zählens der übermittelten Eingaben an die A.E.M.C. (4c) und die Antworten, die von derA.E.M.C. (4c) empfangen worden sind, aufweist.

17. Verfahren zur Erkennung eines Betreibers oder eines Internetproviders nach einem der Ansprüche 10, 11, 12, 14 und 15, **dadurch gekennzeichnet, dass** der Schritt (S8) zum Aussenden einer Antwort ausgehend von der Plattform der Verwaltung von Identifikationen (4) an den Terminalserver (1) des Benutzers aus dem Versenden eines Elementes des Typs S.M.S., an die SIM Tool Kit - Anwendung oder an die Software (2) besteht.

18. Verfahren zur Erkennung eines Betreibers oder eines Internetproviders nach einem der Ansprüche 10, 11, 12, 13, 15 und 16, **dadurch gekennzeichnet, dass** der Schritt (S8) die Aussendung einer Antwort von der Plattform zur Verwaltung von Identifikationen (4) zu dem Terminalserver (1) des Benutzers die Aussendung einer zugänglichen Verbindung vom Terminalserver (1), der mit einem Anschluss W.A.P. oder 3G ausgestattet ist, betrifft, wobei auf diesen Schritt Folgendes folgt:
- ein Schritt (S8a) zum Herunterladen einer Datei mittels eines Terminalservers (1) des Benutzers, welche mindestens ein Antwortelement aufweist, das mindestens einer Rufnummer des Teilnehmers entspricht, wofür eine Recherche des Betreibers oder Internetproviders durchgeführt worden ist;
- ein Schritt (S8b) des Löschens des provisorischen Kontos des Erinnerungsmittels (4b) der Verwaltungsplattform (4).

19. Verfahren zur Erkennung eines Betreibers oder eines Internetproviders nach einem der vorangegangenen Ansprüche, **dadurch gekennzeichnet, dass** das Antwortelement für jede Rufnummer, für die eine Recherche durchgeführt worden ist, einen Begleitcode mit oder ohne Piktogramm bildet, welcher einen Betreiber oder Internetprovider oder einen Fehler repräsentiert, wobei der Schritt (S9) der Reaktion der SIM Tool Kit - Anwendung oder der Software (2) Folgendes aufweist:
- einen Schritt des Erfassens (S9a) des Codes oder des entsprechenden Piktogramms, die als Antwort auf jede Rufnummer erhalten wurde, dessen Betreiber oder Internetprovider recherchiert worden ist, wobei das Piktogramm noch nicht in einem Erinnerungsmittel der SIM-Karte, der Software oder des Terminalservers registriert worden ist, oder
- einen Schritt der Entzifferung (S9a bis) des erhaltenen Codes als Antwort auf jede Rufnummer deren Betreiber oder Internetprovider recherchiert worden ist, wobei der Code einem Piktogramm entspricht, das in einem Erinnerungsmittels der SIM-Karte, der Software oder des Terminalservers registriert ist, und
- einen Schritt (S9b) des Aktivierens eines Piktogramms, das einem Antwort-Code, der mit der Rufnummer verbunden ist, entspricht,
- einen Schritt (S9c) der Anzeige in Bezug auf den Terminalserver (1) mindestens eines Piktogramms, das dem Betreiber oder Internetprovider der Rufnummer entspricht, für die eine Antwort erhalten worden ist.

20. Verfahren zur Erkennung eines Betreibers oder Internetproviders nach einem der vorangegangenen Ansprüche, **dadurch gekennzeichnet, dass** das Antwortelement für jede Rufnummer, für die eine Recherche durchgeführt worden ist, ein Piktogramm bildet, das einen Fehler repräsentiert, wobei Schritt der Reaktion der Anwendung SIM Tool Kit oder der Software Folgendes aufweist:
- einen Schritt der Anzeige (S9c) an dem Terminalserver mindestens eines Piktogramms, welches dem Betreiber oder Internetprovider der Rufnummer entspricht, für welche eine Antwort erhalten worden ist, oder Anzeige einer Mitteilung, eines Codes und/oder eines Fehlerpiktogramms.

21. Verfahren zur Erkennung eines Betreibers oder Internetproviders nach einem der vorangegangenen Ansprüche, **dadurch gekennzeichnet, dass** wenn die Nummer, für die eine Untersuchungsanfrage gestartet worden ist eine fremde Nummer ist, die nicht zu der Basis der nationalen A.E.M.C. gehört, der Fehlercode durch eine Verbindungsadresse mit einer A.E.M.C. ersetzt wird, der einem fremden Land der Nummer entspricht.

22. Verfahren zur Erkennung eines Betreibers oder eines Internetproviders nach einem der Ansprüche 10 bis 21, **dadurch gekennzeichnet, dass**, wenn die Nummer, für die eine Untersuchungsanfrage gestartet worden war, eine ausländische Nummer ist, die nicht zu der Basis der nationalen A.E.M.C. gehört, das Verfahren Folgendes aufweist:
- einen Schritt der Unterscheidung des Ländercodes der recherchierten Nummer,
- einen Schritt der Übertragung des Ländercodes der recherchierten Nummer an eine supranationale Einrichtung A.E.M.I. (Annuaire Externe Mobilité International), die eine Tabelle integriert, die eine Korrespondenz zwischen den Ländercodes und den Adressen der nationalen A.E.M.C aufweist, wobei die A.E.M.I mit der Gesamtheit der nationalen A.E.M.C. verbunden sind,
- einen Schritt der Ausfertigung und Absendung einer Eingabe an die A.E.M.C durch die A.E.M.I., die dem Ländercode der recherchierten Nummer entspricht,
- einen Schritt der Ausfertigung der Absendung einer Antwort an die Eingabe der A.E.M.I. durch die A.E.M.C., wobei die Antwort mindestens eine recherchierte Nnummer und eine Codeanzeige aufweist, die oder die nicht mit dem Piktogramm des ausländischen Betreibers verbunden ist, der der Recherchenummer entspricht,
- einen Schritt des Aufdeckens eines Unter-Kontos, das der ausländischen recherchierten Nummer entspricht.

23. Verfahren zur Erkennung eines Betreibers oder eines Internetproviders nach einem der vorangegangenen Ansprüche, **dadurch gekennzeichnet, dass** das provisorische Konto in dem Erinnerungsmittel (4b) der Verwaltungsplattform (4) gespeichert wird, wobei das Verfahren mindestens Folgendes aufweist:
- einen Schritt zur Aufdeckung einer Korrespondenz zwischen einer Nummer und dessen Betreiber/Internetprovider mindestens einer Datenbank der A.E.M.C.
- einen Schritt der Recherche der verschiedenen Formate für die Nummer, dessen Betreiber aufgedeckt worden ist, wobei eine Überseizungstabelle einer Nummer mit mehreren Formatmöglichkeiten der erkannten Betroffenen zwischengeschalten wurde,
- einen Schritt für die Änderung des Identifikationselementes des Betreibers des Unter-Kontos verbunden mit einer Rufnummer dessen Korrespondenz aufgedeckt worden ist,
- einen Schritt der Übertragung des neuen Identifikationselementes des Betreibers des Terminalservers (1) dessen Nummer mit dem provisorischen Konto verbunden ist.
